**Europäisches Patentamt**

**European Patent Office**

**Office européen des brevets**

(11) Publication number: **0 215 668**
**B1**

(12) **EUROPEAN PATENT SPECIFICATION**

(45) Date of publication of patent specification: **19.12.90**

(21) Application number: **86307114.8**

(22) Date of filing: **16.09.86**

(51) Int. Cl.⁵: **G 02 B 6/44**

(54) Optical fiber distribution apparatus.

(30) Priority: **17.09.85 US 776822**
**22.01.86 US 821234**

(43) Date of publication of application:
**25.03.87 Bulletin 87/13**

(45) Publication of the grant of the patent:
**19.12.90 Bulletin 90/51**

(84) Designated Contracting States:
**AT BE CH DE FR GB IT LI LU NL SE**

(56) References cited:
**EP-A-0 116 480      EP-A-0 211 208**
**EP-A-0 146 478      DE-A-2 735 106**
**EP-A-0 149 250**

**PATENT ABSTRACTS OF JAPAN, vol. 8, no. 183 (P-296)1620r, 23rd August 1984; & JP-A-59 74 523 (FURUKAWA DENKI KOGYO K.K.) 27-04-1984**

**PATENT ABSTRACTS OF JAPAN, vol. 10, no. 15 (P-422)2072r, 21st January 1986; & JP-A-60 169 811 (FURUKAWA DENKI KOGYO K.K.) 03-09-1985**

(73) Proprietor: **ADC TELECOMMUNICATIONS, INC.**
**4900 West 78th Street**
**Minneapolis Minnesota 55435 (US)**

(72) Inventor: **Nelson, Calvin G.**
**63 Indian Meadow Drive**
**Northborough, Mass. 01532 (US)**
Inventor: **Anton, Mark**
**925 - 30th Ave. South**
**Minneapolis, MN 55406 (US)**

(74) Representative: **Darby, David Thomas et al**
**Abel & Imray Northumberland House 303-306**
**High Holborn**
**London WC1V 7LH (GB)**

Courier Press, Leamington Spa, England.

## Description

Field of the Invention

The present invention is directed to distribution equipment for fiber optic cables. The equipment has particular application in the communications industry with respect to storing fibers or storing fibers from a trunk cable which interconnect with fibers from individual distribution cables. The invention provides for orderly connection between and distribution of fiber optic cables and for storage of excess cable lengths.

Background of the Invention

Fiber optics is a relatively new technology, but is increasingly replacing hard wire electrical cable, especially for communications applications. In the telephone industry, a trunk cable comes into a central office and is connected to a number of distribution cables which lead to user installations. Distribution panels provide a way to permanently connect the fibers from a trunk line to one end of a connector. Fibers from the distribution cables are then connected to the other end of the connector. It is important, however, because of the large number of fibers being connected that there is a method for organizing the connections and the cables.

Panels for use in organizing the distribution of fibers from a trunk line to distribution lines are known. In known panels, however, the splice from a fiber in the trunk cables to a fiber in a pigtail cable is made at a different subassembly from the connection of a pigtail fiber to the fiber of a distribution cable. Also, known panels do not have a planned design for storing excessive lengths of fiber.

Consequently, known panels are plagued with a "rat's nest" of excess fiber and cable. The present distribution apparatus eliminates such problem and provides a number of other novel features.

The present invention provides distribution apparatus for cross connecting a first optical fiber with a second optical fiber through a third optical fiber, said apparatus being formed as a walled housing enclosing a storage space, and comprising a plurality of means for connecting fibers and means for storing fiber portions, said storage and said connecting means being mounted for rotation between a position within said storage space and an access position substantially outside said storage space, characterized in that the apparatus also comprises at least one drawer slidable between a first position in said storage space and a second position substantially outside said storage space, said drawer comprising means for connecting said first and third fibers together and further means for storing fiber portions, and further characterized in that said rotatably mounted means comprise trays, at least one tray comprising means for storing fiber portions and the means for connecting said second and third fibers together.

Preferably, the distribution apparatus includes a housing defining a storage space wherein the storage space includes an openable front wall generally along the upper portion of the housing and the drawer is in the lower portion of the housing. The drawer may be moved from its regular storage location by sliding it forward to expose its contents for easy accessibility. Advantageously, first fibers from a trunk cable are routed into the housing to the drawer. The first fibers are connected to first ends of pigtail fibers with splicing mechanism in the drawer. The pigtail fibers are routed to the plurality of trays which provide a storage capability, as necessary, as well as channels for directing the pigtail fiber to connecting mechanism attached to each tray. Second fibers from distribution cables are connected at the connecting mechanism to the pigtail fibers. The second fibers are routed through a second channel in each tray for storage in each tray, as necessary, before exiting from the housing. Alternatively, it is sometimes desirable to route the first fibers from the trunk cable directly into the trays for connection to the connecting mechanism and the second fibers. In such instance, the pigtail fiber and the drawer are not used.

The apparatus is particularly advantageous in that it provides an organized method for connecting an outside plant trunk cable with fiber termination equipment. Individual trays and a drawer having both storage and access positions are provided with structure to receive excess trunk and distribution cable fiber and to hold a pigtail fiber. The apparatus provides for splicing and connecting mechanisms. The trays swing between a storage position and an access position and the drawer slides between a storage position and an access position to allow service people easy access for installation and repair.

Of further advantage in the preferred embodiment is the locating of the splice between the trunk cable fiber and the pigtail fiber in a drawer subassembly immediately beneath the storage region in which the stacked trays are located. The pigtail fibers lead from the drawer up to the tray subassembly where they are connected to the fibers of the distribution cable. Again, the sliding drawer and the swingable trays provide for easy access from the front of the housing to the splices and connectors.

Yet another advantage is that a pigtail or other cable or fiber may simply be stored in one or more drawers, without any interconnections made. Of even greater advantage is that two or more stacked drawers may be used in combination for storage of such fiber. In this application, a removable bulkhead plate functions to hold two or more trays vertically aligned so that one tray is not moved with respect to the other thereby bending or stressing a fiber in an unacceptable fashion.

Other advantageous features include easy installation of trays and equally easy replacement of a tray; controlled bend radii for variously routed optical fibers; hold down tabs in each tray for holding the various fibers in place; a clamp for holding the trunk or outside plant cable to the housing; and conduits or tubes for readily routing fibers from the trunk line to a particular tray for splicing to the pigtail therein.

Additional features and objects of the present invention will be apparent from the detailed description of a preferred embodiment presented hereafter with reference to the following drawings.

(There are no figures numbered 1 to 9 in the drawings.)

FIGURE 10 is a perspective view of an alternate embodiment of apparatus in accordance with the present invention;

FIGURE 11 is a front elevational view of the apparatus shown in FIGURE 10;

FIGURE 12 is a cross-sectional view taken generally along line 12—12 of FIGURE 11, where the drawer has been opened and one tray has been partially rotated out of the housing;

FIGURE 13 is a cross-sectional view taken generally along line 13—13 of FIGURE 11;

FIGURE 14 is a cross-sectional view taken generally along line 14—14 of FIGURE 13;

FIGURE 15 is an exploded perspective view of a tray attached to a hinge of the type used in the alternate embodiment;

FIGURE 16 is a top plan view of a tray in accordance with the alternate embodiment; and

FIGURE 17 is a bottom view of the tray of FIGURE 16;

FIGURE 18 is a perspective view of the lower tray showing fiber routing when two or more trays are used simply for storage; and

FIGURE 19 is a perspective view of a pair or trays which are used only for storing fiber; and

FIGURE 20 is a front elevational view of a bulkhead for holding two trays together as shown in FIGURE 19.

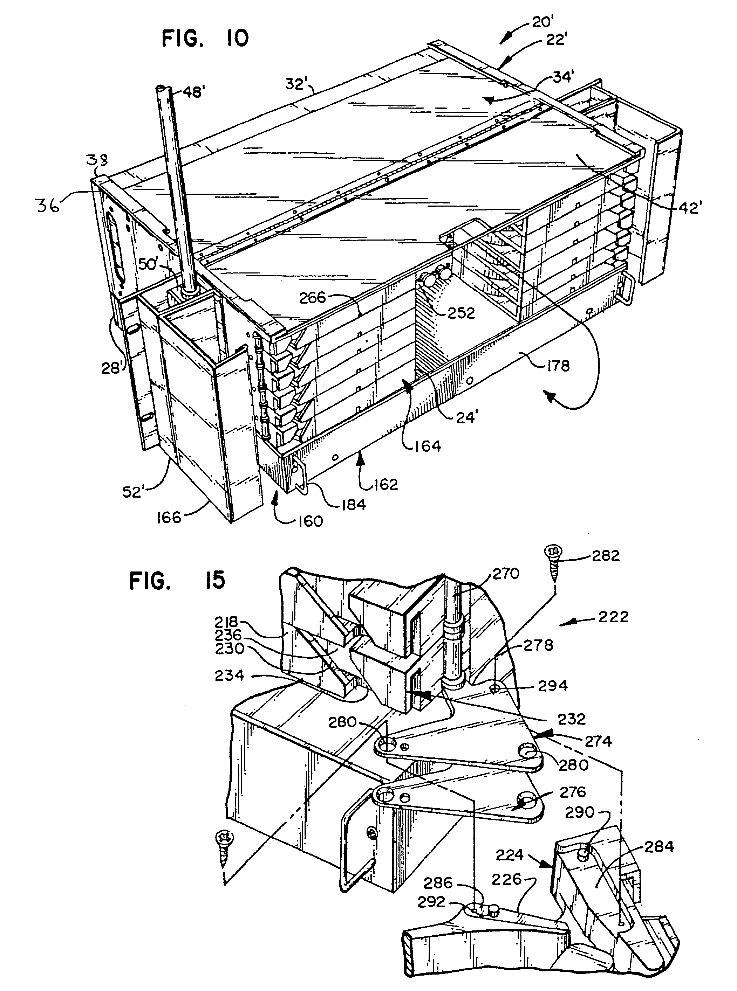

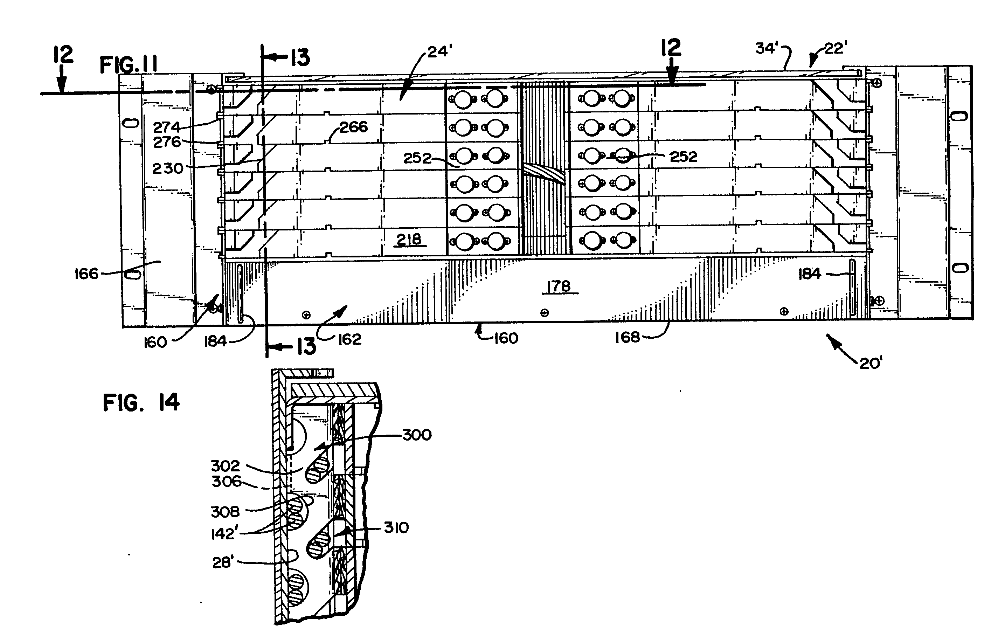

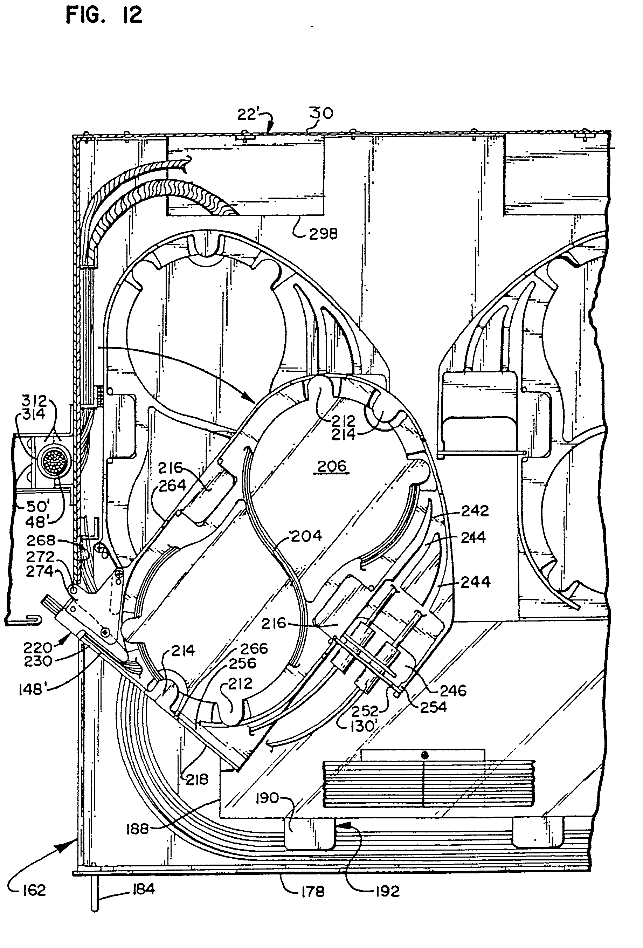

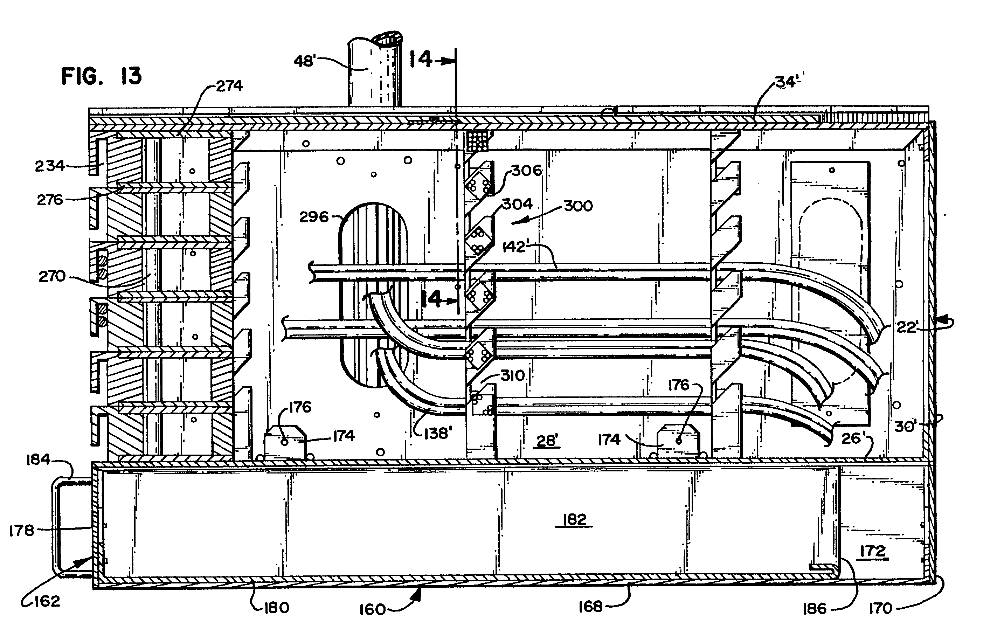

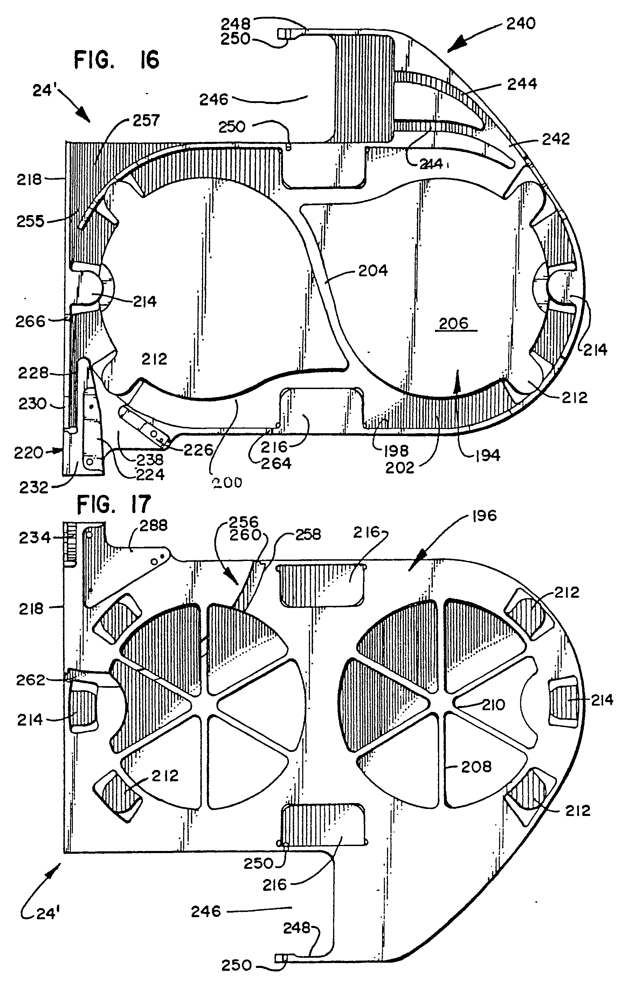

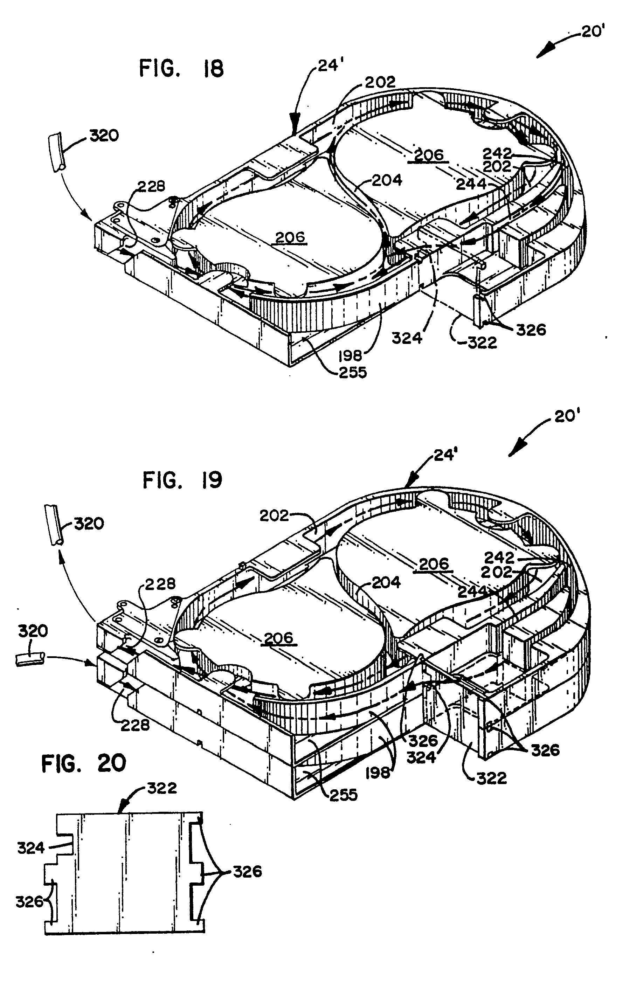

Detailed Description of the Preferred Embodiment

Referring now to the drawings wherein like reference numerals designate identical or corresponding parts throughout the several views, and more particularly to FIGURE 10 distribution apparatus for cross connecting optical fibers from a trunk cable to optical fibers of a plurality of distribution cables is designated generally by the numeral 20'. Apparatus 20' includes a housing 22' for supporting at least one tray 24' and an enclosing frame 160 for holding a drawer 162. Housing 22' includes a plurality of members which define a storage space. Housing 22' is shown having a bottom wall 26, side walls 28', a back wall 30 (see Figure 12), a top wall 32', and a front wall 34' having an openable cover 42'. Housing 22' swingably supports side by side stacks 164 of trays 24' for connecting and organizing trunk cable fibers, pigtail fibers and distribution cable fibers.

It is understood that although a cable is generally a plurality of fibers, apparatus 20' and its alternates may be used to organize or store either a fiber or a cable depending on the application and that with respect to scope of use in apparatus 20' and its alternates, one term is synonymous with the other.

Housing 22' may be made from either metallic or non-metallic materials, and the various walls may be fastened together with nut and bolt combinations, screws, welds or other known fastening mechanisms. Side walls 28' are shown to have a bend 36' at the top edge with a flange 38' extending over and being spaced above top wall 32'. Front wall 34' includes a top support member 40' and a front cover 42' connected together by a hinge 44'. Top support member 40' fits between flange 38' and top wall 32'. When front cover 42' is closed, front cover 42' extends between hinge 44' fastened to the forward edge of top support member 40' and bottom wall 26', as well as from side wall 28'. Front cover 34' is spaced forwardly from the front edges of side walls 28' to accommodate hinge mechanism for trays 24' and to provide for the routing of distribution jumper cable. Front wall 34' is openable by pivoting front cover 42' upwardly about hinge 44' and sliding top support member 40', hinge 44' and front cover 42' rearwardly between flange 38' and top wall 32'. Figure 10 shows housing 22' with front cover 42' open exposing two adjacent stacks of trays 24'. The stacks of trays 24' are separated sufficiently far so that any one tray from one stack may be swung out without interfering with a tray from the other stack.

It should be noted that a plurality of housings 22' may be vertically stacked. Each housing 22' may be independently fastened to a frame or an upper housing may be stacked on a lower housing and retained in place. In the latter case, the bottom wall 26' of the upper housing rests on flanges 38 of the lower housing.

An outside plant trunk cable 48'runs vertically along a housing 22'. Trunk cable 48' is held at clamp 50' fastened to sidewall 28' and a plurality of optical fibers are routed as discussed hereinafter. If cable 48' extends along a stack of housings, a few fibers are routed into each housing, while the cable 48' is clamped to the sidewall of each housing. A three-sided shield 52' is fastened to sidewall 28'and provides a protective guideway for cable 48' and the individual fibers routed into a housing 22'. In a vertical stack of housings 22', shields 52' fit together to form a guideway.

An additional three-sided shield 166 is attached to housing 22' at a location adjacent to shield 52' and also runs generally vertically. Shield 166 forms a second protected guideway, this one for distribution cables. It is pointed out that shields 52' and 166 may be attached on either side or both sides of housing 22'.

As shown in FIGURE 13, enclosing frame 160 for drawer 162 includes a bottom wall 168, a back wall 170, and side walls 172. Each side wall 172 has a pair of tabs 174 which extend upwardly and somewhat inwardly to project through openings (not shown) in bottom wall 26' of housing 22'. Screws 176 are threaded through side walls 28' into tabs 174 to hold enclosing frame 160 to the bottom of housing 22'. It is noted that additional enclosing frames 160 and drawers 162 may be added in a similar fashion by inserting the tabs 174 of an additional frame 160 into openings (not shown) in the bottom wall of the installed enclosing frame 160.

Drawer 162 includes a front wall 178, a bottom wall 180 and side walls 182. A handle 184 is attached to front wall 178. Drawer 162 extends loosely within enclosing frame 160 from side to side and from bottom wall 168 to bottom 26' of housing 22'. The back end 186 of drawer 162 is spaced forwardly from back wall 170 and is open to provide for fiber routing. As shown in FIGURE 12, the interior of drawer 162 includes conventional mechanism 188 for splicing optical fibers together. Splicing mechanism 188 is preferably clamped near the center of drawer 162 with clamps 190 which also include tabs 192 extending away from splicing mechanism 188 toward the side walls and front wall of drawer 162 in order to retain optical fiber 138' from trunk cable 48' and pigtail optical fiber 142', either of which may be wrapped about brackets 190 in order to store excess length. An additional bracket (not shown) may be used to prevent stored lengths of fiber from falling out the open back of drawer 162.

Housing 22' holds stacks of trays 24'. The details of a tray 24' are shown in FIGURES 16—17. FIGURE 16 shows a top view, while FIGURE 17 shows a bottom view. Tray 24' is preferably a one-piece molded part. Tray 24' has a top 194 generally defining a plane and a bottom 196, also generally defining a plane which is approximately parallel with the top plane. Using the top plane as a reference, surfaces and edges of tray 24' facing upwardly are either perpendicular to the top plane or not greater than 90 degrees from the perpendicular. Similarly, surfaces and edges facing downwardly from bottom 196, are either perpendicular to the top plane or not greater than 90 degrees from the perpendicular. In this way, the molding of tray 24' may be done using a pair of tools which travel toward and away from one another in directions perpendicular to the top plane.

Tray 24' is formed to have a generally oval outer side wall 198 which extends at approximately a right angle from the bottom 196. Tray 24' also includes an inner wall 200 extending upright from bottom 196. Inner wall 200 is spaced from outer wall 198 and defines a routing passage or channel 202 therebetween. Channel 202 forms an endless path generally in the shape of an oval having semi-circular ends and opposite sides. A second routing passage or channel 204 is formed through inner wall 200 and extends generally from one of the opposite sides to the other. The portions enclosed by channels 202 and 204 form flat surfaces 206 as a part of top 194. The regions beneath surfaces 206 are cavities having structure therein in the form of a plurality of spokes 208 radiating from hubs 210 near the center of each surface 206, said structure providing support for inner wall 200 and surfaces 206. A pair of tabs 212 extend outwardly from each of surfaces 206 in the general region of the corners of tray 24'. Tabs 212 extend approximately to outer wall 198, although wall 198 in the region of tabs 212 is recessed, thereby providing a space between each tab 212 and outer wall 198 through which a fiber may be inserted. In addition, a tab 214 extends inwardly from outer wall 198 in a region near the rear end of tray 24' approximately midway between tabs 212 of a pair. A tab 214 also extends from front wall 218 toward inner wall 200. Tabs 214 extend approximately to inner wall 200, although inner wall 200 is recessed in the general regions near tabs 214 so that fibers may be pressed between inner wall 200 and a tab 214. In addition, larger rectangular tabs 216 extend inwardly from outer wall 198 near the center of the sides of oval shaped channel 202. As with the other tabs, there is space between tabs 216 and inner wall 200 to fit fibers therethrough. As shown in FIGURE 17, there are openings in bottom 196 beneath each of tabs 212, 214 and 216 to provide for the forming of the tabs during the molding process.

Tray 24' has a flat front wall 218 which is especially convenient for attaching a sticker or otherwise providing a mechanism for identifying the circuit which is accessible within a particular tray. Wall 218 is tangential to the forward end of oval shaped channel 202 and forms a squared forward end of tray 24'. At a corner 220, generally where a straight walled side of outer wall 198 and front wall 218 would intersect, structure is formed to provide attachment to hinge mechanism 222 (see FIGURE 15). The structure is essentially a pair of elongated posts 224, 226 oriented to form two legs of a triangle. Post 224 is generally parallel with front wall 218 and is spaced rearwardly from it. A passage 228 extends from channel 202 between front wall 218 and post 224 and runs generally parallel with front wall 218. Front wall 218 has a diagonal side edge 230 approximately midway along post 224 when viewed from the front. Sidewardly of edge 230, a covering tab 232 extends forwardly from post 224 and downwardly to appear to be an extension of front wall 218. Tab 232 has a diagonal edge 234 facing edge 230 so that a diagonal slot 236 (see FIGURE 15) is formed between edges 230 and 234. In addition, the bottom 196 of passage 228 stops at the most sidewardly portion of edge 230 thereby allowing for easy insertion of a fiber into passage 228 by inserting it through 236 and under covering tab 232.

A second passage 238 is formed near a projected intersection of posts 224 and 226. Passages 228 and 238 provide for entry and exit of fibers to channel 202.

Generally diagonal from corner 220, is a portion 240 extending sidewardly from outer wall 198. Side portion 240 includes a third routing passage in the form of channel 242 which leads from channel 202 and separates into a pair of channels 244 leading to region 246 where connectors 130' are attached. Channel 242 and the pair of channels 244 are generally directed forwardly as they proceed away from channel 202.

Sidewardly extending portion 240 includes a cantilevered wall 248 spaced from outer wall 198. Each of walls 198 and 248 include small slots 250 across from each other and along the top and bottom edges. Bulkhead 252 (see FIGURE 12) includes a leg 254 at each of its corners. Legs 254 fit in slots 250. Bulkhead 252 is easily installed and removed since cantilevered wall 248 is readily sprung away from wall 198 to allow easy insertion and removal of legs 254.

A fourth routing passage extends along front wall 218. An opening 255 is formed between outer wall 198 and front wall 218. Fiber proceeding from a connector 130' installed on bulkhead 252 may be routed in the fan-like region 257 between outer wall 198 and front wall 218 through opening 255 along the very forward portion of channel 202 or into and around channel 202 and out passage 228.

Trays 24' include a mechanism 256 which prevents the rotation of more than 90 degrees of one tray with respect to a next adjacent tray in a stack 164. The mechanism 256 includes a circular slot 258 in bottom 196. Slot 258 is centered on the rotational axis of hinge 222 when tray 24' is installed to hinge 222. At the side wall 198 end of slot 258, wall 198 extends downwardly to the bottom plane at the half of slot 258 farthest from the rotational axis. At the forward wall 218 end of slot 258, forward wall 218 extends downwardly to the bottom plane in the half of slot 258 nearest the rotational axis. Thus, an opening 260 is formed at the wall 198 end of slot 258 and an opening 262 is formed at the wall 218 end of slot 258. Directly above opening 260 rising above outer wall 198 is a protuberance 264, and directly above opening 262 rising above wall 218 is a protuberance 266. Protuberances 264 and 266 have a height no greater than the depth of openings 260 and 262. Thus, when a set of trays 24' are stacked as shown in FIGURE 10, protuberance 266 fits in opening 262. When a tray 24' is rotated out of housing 22', protuberance 264 moves through slot 258 of the tray thereabove. As the rotating tray nears a 90° rotation with respect to next adjacent trays, protuberance 264 catches on the tray wall 218 above the rotating tray on the part of wall 218 which extends into slot 258. Similarly, protuberance 266 on the tray below the rotating tray catches the part of wall 198 of the rotating tray which extends into slot 258. Thus, the rotating tray is prevented from rotating more than 90° with respect to either of the tray above it or below it. This stop mechanism also functions to strengthen the trays as a stacked unit since the trays above and below a rotated tray help prevent it from being torqued with respect to the hinge and thereby broken.

Hinge 222 includes a hinge plate 268 (see FIGURE 12) with a plurality of spaced-apart, aligned sleeves 270 and a hinge pin 272 for fitting in the sleeves (see also FIGURE 15). Each pair of holding plates 274 and 276 for each tray is spaced apart by a sleeve 270. A holding plate 276 for an upper tray and a holding plate 274 for a lower tray receive hinge pin 272 between each set of adjacent sleeves 270. Holding plates 274 and 276 are identical. A holding plate 274, for example, is generally triangular with an extension 278 near one corner. Extension 278 has an opening therein for receiving hinge pin 272. At the vertices farthest from extension 278, there are openings 280 for receiving screws 282. One of the screws each threads into a different one of posts 224 and 226. Each of posts 224 and 226 have recessed portions 284 and 286 in the top and a recessed portion 288 in the bottom for receiving holding plates 274 and 276. A protrusion 290, 292 extends outwardly from each recessed portion 284 and 286 in each post. Protrusion 290 is received in an opening 294 in the vertex near extension 278, while protrusion 292 is received in an opening 296 near the opening 280 for screw 282. Similarly situated protrusions extend on the bottom side of tray 24' and are received in similar openings in holding plate 276. Tray 24' is attached to holding plates 274 and 276 so that extension 278 is nearest to cover 232 at corner 220. Although screws are disclosed as an attaching mechanism for tray 24' to hinge 222, it is understood that screws are not needed and that a sufficient number and placement of protrusions from tray 24' and openings in holding plates 274 and 276 for receiving the protrusions will function equivalently. In fact, there is advantage to eliminating the screws in that then trays may be removed and installed even more quickly during assembly or replacement.

It is noted that a complete stack 164 of trays 24' may be assembled and held together with the use of a hinge 222. The hinge 222 advantageously holds holding plates 274 and 276 captive and in place as a result of sleeves 270 and pin 272. Trays 24' are easily inserted between a pair of holding plates 274 and 276 so that the protrusions are received in openings and the screws are threaded into place. A stack is readily assembled. The stack is attached to housing 22' by fitting hinge plate 268 just inside the front edge of a side wall 28' and inserting a plurality of screws through wall 28' to thread them into hinge plate 268.

Optical fibers 138' from trunk cable 48' enter housing 22' at opening 296 in a side wall 28'. Fibers 138' are routed along side wall 28' to an opening 296 in bottom wall 26' which leads to the open back of drawer 162. Pigtail fibers 142' are routed back through opening 298 to passages 238 in the various trays 24'. Fibers are ordinarily routed along both side walls so as to make use of both stacks 164 of trays 24'.

Brackets 300 (see FIGURES 13 and 14) retain fibers 138, and 142, against side walls 28' so that the fibers cannot be caught by a moving tray 24'. Brackets 300 are angled members having portions 302 extending outwardly from side wall 28' and portions 304 extending parallel to side wall 28'. A plurality of retaining tabs 306 extending sidewardly from portion 302 are screwed or otherwise attached to side wall 28'. Portion 302 has a plurality of semi-circular openings 308 which are next to side wall 28' and retain pigtail fibers 142' thereto. Portion 304 which extends parallel to side wall 28' includes a plurality of spaced-apart upwardly angled slots 310 therein. Slots 310 also extend at a downward angle into portion 302. In this way, a trunk cable fiber may be inserted into slot 310 in portion 302 and retained by a part of portion 304 extending upwardly therefrom. Hook and loop material is fastened to one of brackets 300 with matching material fastened to each of trays 24' in a stack 164 so as to provide a holding mechanism for trays 24' when they are located fully within the storage space of housing 22'. It is understood, however, that the retaining brackets and retaining mechanism for the trays is representative of the type of mechanisms usable for the functions.

In use, a trunk cable 48' is routed into the guide way formed by shield 52' and clamped at clamp 50'. Clamp 50' preferably includes a rubber member 312 having a circular opening. The rubber member is cut through the center of the circular opening such that the cut is parallel to side wall 28'. A pair of screws and a clamping plate force the two members together as the screws are threaded into side wall 28'. A rubber grommet 314 inserted in the opening in rubber member 312 may be used to further reduce the size of the opening to better match the size of the cable being clamped. Several sheaths holding optical fiber are separated from cable 50' and routed as indicated hereinbefore through opening 296 in side wall 28' and opening 298 near the back of bottom wall 26' into enclosing frame 160 and through the open back of drawer 162 into drawer 162. The fiber 138' is inserted into slots 310 of brackets 300 along side wall 28' to retain the fiber next to side wall 28' and away from entanglement with trays 24'. With drawer 162 open, fiber 138' from trunk cable 48' may be easily spliced at splicing mechanism 188 to a first end of pigtail fiber 142' leading to various trays 24'. Any excess length of trunk cable fiber 138' is wound around brackets 190 in drawer 162 for orderly storage.

Ordinarily, pigtail fibers 142' are pre-routed from drawer 162 to the various trays 24'. Pigtail fibers proceed from splice mechanism 188 through the open back of drawer 162 and opening 298 in bottom wall 26' of housing 22' along side wall 28' to passages 238 in the various trays 24'. The pigtail fibers are threaded through openings 308 in brackets 300 so as to be retained next to side wall 28' thereby being out of the way of fibers coming from trunk cable 48'.

Pigtail fiber 142' enters a tray 24' at passage 238 and is routed around oval channel 202 to store any excess length, as required. The second end portion of the fiber is routed from channel 202 through second channel 204 and back into channel 202 before proceeding into channel 242 and split channels 244. The second end of pigtail fiber 142' is then connected to connector 130'.

To accomplish the indicated routing, a tray may be detached from hinge 222. Alternatively, an entire stack of trays 164 may be detached from housing 22' by unfastening hinge plate 268 from side wall 28'. A further alternative is to simply rotate a drawer outwardly from the storage space defined by housing 22' to expose the various channels. When placing fiber in channel 202, it is conveniently pressed between tabs 212 and outer wall 198, between tabs 214 and inner wall 200, and between tabs 216 and inner wall 200. The various tabs retain the fiber within the tray and prevent the fiber from flexing upwardly and becoming caught in a next adjacent tray. Channels 202, 204, 242, 244 provide gentle curves for the routed fiber. The present invention advantageously controls the bend radii of fibers, thereby maintaining low signal loss at various wave lengths, especially long wave lengths.

The pigtail fiber 142' is connected at its second end to one part of connector 130' which is fastened to a removable bulkhead 252. Advantageously, the easily removable bulkhead 252 provides for rapid change of connectors from one style to another if necessary. It is also noted that the present invention may have the further use of routing trunk cable fiber directly into a tray 24' all the way to a field installable connector 130' at bulkhead 252.

A distribution fiber 148' is then connected to the circuit at connector 130' and routed from connector 130' through opening 255 and around oval channel 202 for storage, if desired, before exiting tray 24' at passage 228 into the guideway formed by shield 166.

With the various fibers routed and retained and the splices and connections completed, the drawer 162 is closed and all trays 24' are swung back into housing 22' and cover 34' is moved to close the front of housing 22'.

With a minor modification, apparatus 20' can also be used just to store cable or fiber, usually a pigtail cable or fiber. It is clear that a single tray 24' could be used to store a fiber simply by removing shield 166, if necessary, and routing the fiber into passage 228 and routing it about channels 202 and 204 before directing it out again from passage 228.

Apparatus 20' may also, however, be used to store a cable or fiber of length such that more than one tray is needed to store the entire length, for example, a pair of trays. In this case, shield 166 is again removed, if necessary. Also bulkhead 252 and connectors 130' attached thereto are removed from the trays which are to be used to store the fiber. With only the lower of the trays which are to be used for storage swung to the access position, blank bulkhead 322 is installed on it. Note that legs 326 engage slots 250 to hold bulkhead 322 in the lower tray. Bulkhead 322 has legs along its outer edge to engage slots 250 in walls 248 of both trays, but preferably only has legs to engage slots 250 of the lower tray along its inner edge. With reference to FIGURE 18, fiber 320, probably a pigtail fiber, is routed into passage 228 (see FIGURE 16). The fiber is then wrapped around tray 24' in channel 202. Preferably, on the first wrap, fiber 320 is passed through channel 204. That reverses the direction of the fiber so that when tray 24' is filled, fiber 320 may be directed out through channel 242 and preferably the channel 244 nearest outer wall 198. It is noted that if the wrapping of the fiber in tray 24' is done properly, a minimum radius equal to the radius of surface 206 will be maintained.

When the lower of trays 24' is filled, the upper tray 24' of the pair may be swung directly over the lower tray. Bulkhead 322 is snapped into place by springing wall 248 outwardly until leg 326 engages slot 250. Bulkhead 322 includes an opening 324 preferably near the outer wall 198 of upper tray 24'. Fiber 320 is then routed through opening 324 and into upper tray 24' through opening 255. Fiber 320 is wrapped in channel 202 of upper tray 24' as much as desired and then directed out through passage 228.

With respect to this latter storage application, it is understood that additional trays beyond a pair as just described may be used if necessary and in a similar fashion. Bulkhead 322 would simply be longer and include more openings 324.

Apparatus 20' is a particularly efficient organizer of fibers distributed from an outside plant trunk cable to numerous distribution cables. The apparatus contains all the fibers and eliminates any "rat's nest" situations. The apparatus is completely front accessible and, consequently, makes efficient use of space through the elimination of aisles along the sides or back of a stack of equipment

## Claims

1. Distribution apparatus for cross connecting a first optical fiber with a second optical fiber through a third optical fiber, said apparatus being formed as a walled housing enclosing a storage space, and comprising a plurality of means for connecting fibers and means for storing fiber portions, said storage and said connecting means being mounted for rotation between a position within said storage space and an access position substantially outside said storage space, characterized in that the apparatus also comprises at least one drawer slidable between a first position in said storage space and a second position substantially outside said storage space, said drawer comprising means for connecting said first and third fibers together and further means for storing fiber portions, and further characterized in that said rotatable mounted means comprise trays, at least one tray comprising means for storing fiber portions and the means for connecting said second and third fibers together.

2. Apparatus in accordance with claim 1, wherein each of said trays includes first and second channels, said first channel being for receiving and storing at least a portion of said third fiber, said second channel being for receiving and directing said second fiber from said connecting means to outside said housing.

3. Apparatus in accordance with claim 1 or claim 2, wherein each of said trays has a top and a bottom, said top defining a plane, the surfaces and edges of said top being in, or parallel or perpendicular to, said plane or facing upward and the surfaces and edges of said bottom being parallel or perpendicular to said plane or facing downward, whereby each of said trays may be molded using a pair of tools which travel toward and away from one another in directions perpendicular to said plane.

4. Apparatus in accordance with any one of claims 1 to 3, wherein said housing has opposite sides and said apparatus further includes first means for guiding a trunk cable along one of said sides and second means for guiding distribution cables along one of said sides.

5. Apparatus in accordance with any one of claims 1 to 4, including means for interconnecting a pair of said trays together in stacked alignment and means for routing said third fiber from one tray to the other for storage in both.

6. Apparatus in accordance with claim 5, wherein each of said trays has an endless main passage with an outer wall and an entry opening in said outer wall through which said fibers may be routed to enter or to exit with respect to said main passage, each of said trays also including a second routing passage located inwardly of said main passage and extending between spaced locations of said main passage, each of said trays further including a sidewardly extending portion having a third routing passage formed therein, said third routing passage being formed outwardly of said main passage and having one end extending from said main passage and a second, unconnected, open end, said plurality of trays including first and second trays vertically stacked and adjacent with respect to one another; said interconnecting means including a bulkhead facing said open end of said third routing passage of each of said first and second trays, said bulkhead holding said first and second trays together.

7. Apparatus in accordance with claim 6, wherein each of said trays has a transverse opening on a side of said tray generally opposite said entry opening, said bulkhead also having an opening for allowing said fiber stored in said first tray to pass from said open end of said third routing passage of said first tray through said bulkhead opening to said transverse opening in said second tray.

8. Apparatus in accordance with claim 7, wherein said first and second trays include means for detachably snapping said bulkhead thereto.

9. Apparatus in accordance with any one of claims 1 to 8, including tray moving means with means for stacking into a stack said plurality of trays and means for attaching and detaching said stack from said housing as a unit.

10. Apparatus in accordance with claim 9, wherein said moving means further includes means for rotating all of said trays in said stack about an axis, including means for preventing one tray from being rotated more than 90 degrees with respect to a next adjacent said tray.

11. Apparatus in accordance with claim 9, wherein said stacking means includes a hinge plate with a plurality of spaced-apart, aligned sleeves and a hinge pin for fitting in said sleeves, said stacking means further including a pair of holding plates for each tray, each pair of holding plates being held by said hinge pin and being separated by one of said sleeves, one of said trays being received between each of said pairs of holding plates and being held by each, said tray attaching means attaching said hinge plate to said housing.

12. Apparatus in accordance with claim 11, wherein said housing has a front and said trays have a corner and an arcuate side diagonally opposite from said corner, each of said pairs of holding plates being attached to one of said trays at said corner, said apparatus including a pair of adjacent stacks of trays, each of said stacks being attached to said housing at opposite sides of said front of said housing, said arcuate sides allowing said stacks to be located nearer to one another than an angled corner would allow while also allowing each of said trays to rotate out of said storage space past said adjacent stack.

13. Apparatus in accordance with any one of claims 1 to 12, wherein said each of said trays is mounted for rotation about a common vertical axis, and said drawer is horizontally mounted.

14. Apparatus in accordance with any one of claims 1 to 12, wherein each of said trays is mounted for rotation about a common vertical axis, said drawer is horizontally oriented, and mounted beneath said trays.

15. A method of cross connecting a first optical fiber from a trunk cable to a second optical fiber from a distribution cable, said method comprising the steps of:

guiding said trunk cable along a side of a walled housing;

routing a plurality of first fibers from said trunk cable thorough a first opening in said side of said housing to a drawer containing means for splicing each of said first fibers to a respective first end of a different pigtail fiber;

splicing in said drawer each of said first fibers to a respective first end of a different pigtail fiber;

swinging selectively trays rotatably mounted on said housing out of and back into said housing to provide access to said trays;

connecting individual second fibers by corresponding different connecting means to respective second ends of said pigtail fibers, said pigtail fibers each being routed from its corresponding splicing means in said drawer to a respective first channel in a corresponding tray, and thereafter to means in the corresponding tray for connecting a second end of said pigtail fiber to a respective second fiber from said distribution cable;

routing each of said second fibers through a second channel in its corresponding tray and through a second opening in said housing; and

closing said drawer and swinging said trays back into said housing.

**Patentansprüche**

1. Verteilungsgerät zur Querverbindung einer ersten optischen Faser mit einer zweiten optischen Faser durch eine dritte optische Faser, wobei das Gerät als ein mit Wänden umgebendes Gehäuse ausgebildet ist, das einen Speicherraum umschließt, und mehrere Mittel zur Verbindung von Fasern und Mittel zum Lagern von Faserabschnitten aufweist, wobei der Speicher und die Verbindungsmittel zur Drehung zwischen einer Position innerhalb des Speicherraums und einer Zugangsposition im wesentlichen außerhalb des Speicherraums angeordnet sind, dadurch gekennzeichnet, daß das Gerät ebenfalls mindestens ein zwischen einer ersten Position im Speicherraum und einer zweiten Position im wesentlichen außerhalb des Speicherraums verschiebbares Schubfach aufweist, wobei das Schubfach Mittel zum Verbinden der ersten und dritten Fasern und zusätzlich Mittel zum Lagern von Faserabschnitten aufweist, und ferner dadurch gekennzeichnet, daß die drehbar angeordneten Mittel Schalen aufweisen, wobei mindestens eine Schale Mittel zum Abspeichern von Faserabschnitten und die Mittel zum Verbinden der zweiten und dritten Fasern miteinander aufweist.

2. Gerät nach Anspruch 1, bei welchem jede Schale erste und zweite Kanäle enthält, wobei der erste Kanal zur Aufnahme und Lagerung von mindestens einem Abschnitt der dritten Faser und der zweite Kanal zur Aufnahme und Weiterleitung der zweiten Faser von den Verbindungsmitteln aus dem Gehäuse heraus vorgesehen ist.

3. Gerät nach Anspruch 1 oder Anspruch 2, bei welchem jede Schale ein Oberteil und ein Bodenteil besitzt, wobei das Oberteil eine Ebene bildet, die Flächen und Kanten des Oberteils in oder parallel zu oder rechtwinklig zu der Ebene verlaufen oder nach oben gerichtet sind und die Flächen und Kanten des Bodenteils parallel oder rechtwinklig zur Ebene verlaufen oder nach unten gerichtet sind, wodurch jede Schale unter Verwendung eines Paares von Werkzeugen gegossen werden kann, die sich aufeinander zu und voneinander weg in Richtungen rechtwinklig zu der Ebene bewegen.

4. Gerät nach einem der Ansprüche 1 bis 3, bei welchem das Gehäuse gegenüberliegende Seiten besitzt und das Gerät ferner erste Mittel zur Führung eines gebündelten Kabels entlang einer der Seiten und zweite Mittel zur Führung von Verteilerkabeln entlang einer der Seiten aufweist.

5. Gerät nach einem der Ansprüche 1 bis 4, mit Mitteln zur Verbindung eines Paares von Schalen miteinander in gestapelter Anordnung und Mitteln zum Durchführen der dritten Faser von der einen Schale zu der anderen zur Lagerung in beiden.

6. Gerät nach Anspruch 5, bei welchem jede Schale einen endlosen Hauptkanal mit einer Außenwand und einer Eingangsöffnung in der Außenwand besitzt, durch welche die Fasern hindurchgeführt werden können, um bezüglich des Hauptkanales ein- oder auszutreten, wobei jede Schale ebenfalls einen zweiten Durchführungskanal aufweist, der innerhalb des Hauptkanales angeordnet ist und sich zwischen beabstandeten Stellen des Hauptkanales erstrecken, wobei jede Schale außerdem einen sich seitwärts erstreckenden Abschnitt mit einem darin ausgebildeten dritten Durchführungskanal aufweist, wobei der dritte Durchführungskanal außerhalb des Hauptkanals ausgebildet ist und ein sich vom Hauptkanal erstreckendes Ende und ein zweites nicht verbundenes, offenes Ende besitzt, wobei die mehreren Schalen erste und zweite Schalen aufweisen, die vertikal gestapelt und benachbart zueinander angeordnet sind; wobei die Verbindungsmittel eine Zwischenwand aufweisen, die zum offenen Ende des dritten Durchführungskanals von jeder der ersten und zweiten Schalen hin gerichtet ist, wobei die Zwischenwand die ersten und zweiten Schalen zusammenhält.

7. Gerät nach Anspruch 6, bei welchem jede Schale eine Queröffnung an einer Seite der Schale im allgemeinen gegenüber der Eingangsöffnung besitzt, wobei die Zwischenwand ebenfalls eine Öffnung besitzt, die eine Durchführung der in der ersten Schale gelagerten Faser vom offenen Ende des dritten Durchleitungskanals der ersten Schale durch die Zwischenwandöffnung zur Queröffnung in der zweiten Schale erlaubt.

8. Gerät nach Anspruch 7, bei welchem die ersten und zweiten Schalen Mittel zur lösbaren Schnapphalterung der Zwischenwand an dieser besitzen.

9. Gerät nach einem der Ansprüche 1 bis 8, das Schalenbewegungsmittel mit Mitteln zum Stapeln mehrerer Schalen in einem Stapel und Mitteln zum Befestigen und zum Abnehmen der Stapel von dem Gehäuse als eine Einheit aufweist.

10. Gerät nach Anspruch 9, bei welchem die Bewegungsmittel außerdem Mittel zur Drehung sämtlicher Schalen in einem Stapel um eine Achse und Mittel aufweisen, die verhindern, daß eine Schale um mehr als 90° gegenüber einer nächsten benachbarten Schale gedreht wird.

11. Gerät nach Anspruch 9, bei welchem die Stapelmittel eine Scharnierplatte mit mehreren voneinander beabstandeten, ausgerichteten Hülsen und einen Scharnierstift zur Lagerung in den Hülsen aufweisen, wobei die Stapelmittel ferner ein Paar von Halteplatten für jede Schale aufweisen, wobei jedes Paar von Halteplatten durch den Scharnierstift gehalten und durch eine der Hülsen getrennt ist, wobei eine der Schalen zwischen jedem der Paare der Halteplatten aufgenommen und von jeder gehalten wird, wobei die Schalenbefestigungsmittel die Scharnierplatte am Gehäuse befestigen.

12. Gerät nach Anspruch 11, bei welchem das Gehäuse eine Vorderseite besitzt und die Schalen ein Eckbereich und ein gekrümmtes Seitenteil besitzen, das diagonal gegenüber dem Eckbereich angeordnet ist, wobei jedes der Paare der Halteplatten an einer der Schalen am Eckbereich befestigt ist, das Gerät ein Paar von benachbarten Stapeln von Schalen enthält, jeder der Stapel am Gehäuse an gegenüberliegenden Seiten der Vorderseite des Gehäuses befestigt ist, die gekrümmten Seitenteile dafür sorgen, daß die Stapel näher zueinander angeordnet werden als ein winkliger Eckbereich erlauben würde, während jede Schale aus dem Speicherraum über den benachbarten Stapel hinaus geschwenkt werden kann.

13. Gerät nach einem der Ansprüche 1 bis 12, bei welchem jede Schale zur Verschwenkung um eine gemeinsame vertikale Achse angeordnet ist und das Schubfach horizontal angeordnet ist.

14. Gerät nach einem der Ansprüche 1 bis 12, bei welchem jede Schale zur Verschwenkung um eine gemeinsame vertikale Achse angeordnet ist, das Schubfach horizontal ausgerichtet und unterhalb der Schalen angeordnet ist.

15. Verfahren zum Querverbinden einer ersten optischen Faser aus einem gebündelten Kabel mit einer zweiten optischen Faser aus einem Verteilerkabel, wobei das Verfahren die Schritte aufweist,

das gebündelte Kabel entlang einer Seite eines mit Wänden versehenen Gehäuses zu führen;

mehrere erste Fasern aus dem gebündelten Kabel durch eine erste Öffnung in der Seite des Gehäuses zu einem Schubfach zu führen, das Mittel zum Spleißen jeder der ersten Fasern an ein entsprechendes erstes Ende einer unterschiedlichen Litzenfaser enthält;

in dem Schubfach jede der ersten Fasern an ein entsprechendes erstes Ende einer unterschiedlichen Litzenfaser zu spleißen;

wahlweise schwenkbare am Gehäuse befestigte Schalen aus dem Gehäuse heraus- und zurück in das Gehäuse hineinzuschwenken, um einen Zugang zu den Schalen zu ermöglichen;

einzelne zweite Fasern durch entsprechende unterschiedliche Verbindungsmittel mit entsprechenden zweiten Enden der Litzenfasern zu verbinden, wobei die Litzenfasern jeweils von ihren entsprechenden Spleißmitteln in dem Schubfach zu einem entsprechenden ersten Kanal in einer entsprechenden Schale und anschließend zu Mitteln in der entsprechenden Schale zu führen, um ein zweites Ende der Litzenfaser mit einer entsprechenden zweiten Faser aus dem Verteilerkabel zu verbinden; jede zweite Faser durch einen zweiten Kanal in ihrer entsprechenden Schale und durch eine zweite Öffnung im Gehäuse hindurchzuführen; und

das Schubfach zu schließen und die Schalen in das Gehäuse zurückzuschwenken.

## Revendications

1. Appareil de distribution pour réaliser une connexion croisée entre une première fibre optique et une seconde fibre optique par l'intermédiaire d'une troisième fibre optique, cet appareil étant réalisé sous forme d'un logement à parois entourant un espace de stockage, et comprenant plusieurs moyens pour la connexion de fibres et des moyens pour le stockage de portions de fibre, ces moyens de stockage et de connexion étant montés à rotation entre une position se situant à l'intérieur de l'espace de stockage susdit et une position d'accès se situant sensiblement à l'extérieur de cet espace de stockage, caractérisé en ce qu'il comprend également au moins un tiroir pouvant glisser entre une première position se situant dans l'espace de stockage susdit et une seconde position se situant sensiblement à l'extérieur de cet espace de stockage, ce tiroir comportant des moyens pour connecter ensemble la première et la troisième fibre et d'autres moyens pour stocker des portions de fibre, cet appareil étant en outre caractérisé en ce que les moyens susdits montés à rotation comprennent des plateaux, au moins un plateau comportant des moyens pour stocker des portions de fibre et les moyens pour connecter ensemble la seconde fibre et la troisième fibre.

2. Appareil suivant la revendication 1, caractérisé en ce que chacun des plateaux comprend un premier et un second canal, le premier canal étant destiné à recevoir et à stocker au moins une portion de la troisième fibre susdite, le second canal étant destiné à recevoir et à diriger cette seconde fibre depuis les moyens de connexion susdits jusqu'à l'extérieur du logement précité.

3. Appareil suivant la revendication 1 ou la revendication 2, caractérisé en ce que chacun des plateaux comporte une partie supérieure et une partie inférieure, la partie supérieure formant un plan, les surfaces et les bords de cette partie supérieure se situant dans ce plan ou parallèlement à celui-ci ou perpendiculairement à celui-ci ou faisant face vers le haut, et les surfaces et les bords de la partie inférieure étant parallèles ou perpendiculaires à ce plan ou faisant face vers le bas, de sorte que chacun des plateaux peut être moulé en utilisant une paire d'outils qui se déplacent l'un vers l'autre et l'un à l'écart de l'autre dans des directions perpendiculaires au plan susdit.

4 Appareil suivant l'une quelconque des revendications 1 à 3, caractérisé en ce que le logement susdit comporte des côtés opposés et en ce que cet appareil comprend en outre des premiers moyens pour guider un câble à grande distance le long de l'un de ces côtés et des seconds moyens pour guider des câbles de distribution le long de l'un des côtés susdits.

5. Appareil suivant l'une quelconque des revendications 1 à 4, caractérisé en ce qu'il comprend des moyens pour interconnecter ensemble une paire de plateaux en un alignement empilé, et des moyens pour guider la troisième fibre d'un plateau à l'autre pour un stockage dans les deux.

6. Appareil suivant la revendication 5, caractérisé en ce que chacun des plateaux comporte un passage principal sans fin présentant une paroi extérieure et une ouverture d'entrée dans cette paroi extérieure, par laquelle les fibres susdites peuvent être envoyées pour pénétrer ou sortir par rapport au passage principal susdit, chacun de ces plateaux comprenant en outre un second passage de guidage localisé intérieurement par rapport au passage principal susdit et s'étendant entre des endroits espacés de ce passage principal, chacun des plateaux susdits comprenant en outre une partie s'étendant latéralement comportant un troisième passage de guidage qui y est formé, ce troisième passage de guidage étant formé extérieurement au passage principal susdit et comportant une extrémité s'étendant depuis ce passage principal et une seconde extrémité ouverte, non connectée, la pluralité des plateaux comprenant un premier et un second plateau empilés verticalement et adjacents l'un à l'autre, les moyens d'interconnexion susdits comportant une cloison faisant face à l'extrémité ouverte susdite du troisième passage de guidage de chacun du premier et du second plateau, cette cloison maintenant le premier et le second plateau ensemble.

7. Appareil suivant la revendication 6, caractérisé en ce que chacun des plateaux présente une ouverture transversale d'un côté de ce plateau, qui est opposée d'une manière générale à l'ouverture d'entrée susdite, la cloison précitée comportant également une ouverture pour permettre le passage de la fibre stockée dans le premier plateau depuis l'extrémité ouverte susdite du troisième passage de guidage du premier plateau à travers l'ouverture susdite de la cloison vers l'ouverture transversale du second plateau.

8. Appareil suivant la revendication 7, caractérisé en ce que le premier et le second plateau comprennent des moyens pour y fixer de façon amovible la cloison susdite.

9. Appareil suivant l'une quelconque des revendications 1 à 8, comprenant des moyens de déplacement des plateaux, comportant des moyens pour l'empilage de la pluralité susdite de plateaux et des moyens pour attacher et détacher cette pile sous forme d'une unité par rapport au logement susdit.

10. Appareil suivant la revendication 9, caractérisé en ce que les moyens de déplacement susdits comprennent en outre des moyens pour faire tourner tous les plateaux de la pile autour d'un axe, ainsi que des moyens pour empêcher un plateau de tourner de plus de 90° par rapport à un plateau immédiatement adjacent.

11. Appareil suivant la revendication 9, caractérisé en ce que les moyens d'empilage comprennent une plaque pivotante comportant une série de manchons alignés, espacés, et une broche de pivotement destinée à s'adapter dans ces manchons, les moyens d'empilage susdits comportant en outre une paire de plaques de retenue pour chaque plateau, chaque paire de plaques de retenue étant maintenue par la broche de pivotement susdite et étant séparée par l'un des manchons, l'un des plateaux susdits étant placé entre les plaques de retenue de chaque paire et étant maintenu par cette paire, les moyens d'attache des plateaux fixant la plaque pivotante au logement susdit.

12. Appareil suivant la revendication 11, caractérisé en ce que le logement comporte une partie avant et les plateaux présentent un coin et un côté courbe diagonalement opposés à ce coin, chacune des paires susdites de plaques de retenue étant attachée à l'un de ces plateaux à l'endroit du coin susdit, cet appareil comprenant une paire de piles adjacentes de plateaux, chacune de ces piles étant attachée au logement suivant les côtés opposés de la partie avant du logement, ces côtés courbes permettant la localisation des piles plus près les unes des autres que ne le permettrait un élément de coin de forme angulaire, tout en permettant également à chacun des plateaux de tourner hors de l'espace de stockage susdit au-delà de la pile adjacente précitée.

13. Appareil suivant l'une quelconque des revendications 1 à 12, caractérisé en ce que chacun des plateaux susdits est monté à rotation autour d'un axe vertical commun, et en ce que le tiroir précité est monté horizontalement.

14. Appareil suivant l'une quelconque des revendications 1 à 12, caractérisé en ce que chacun des plateaux est monté à rotation autour d'un axe vertical commun, le tiroir étant orienté horizontalement et monté en dessous des plateaux précités.

15. Procédé pour réaliser une connexion croisée d'une première fibre optique provenant d'un câble à grande distance à une seconde fibre optique d'un câble de distribution, ce procédé comprenant les opérations suivantes: le guidage du câble à grande distance susdit le long d'un côté d'un logement à parois; l'envoi d'une série de premières fibres optiques depuis ce câble à grande distance à travers une première ouverture prévue dans le côté susdit du logement vers un tiroir contenant des moyens pour pratiquer l'épissure de chacune des premières fibres susdites à une première extrémité correspondante d'une fibre en queue de cochon différente; l'épissure dans ce tiroir de chacune des premières fibres susdites avec une première extrémité correspondante d'une fibre en queue de cochon différente; le basculement sélectif des plateaux montés à rotation sur le logement hors de ce logement et en retour vers celui-ci pour créer un accès à ces plateaux; la connexion des secondes fibres individuelles par des moyens de connexion différents correspondants à de secondes extrémités correspondantes des fibres en queue de cochon, ces fibres étant chacune guidées depuis leur moyens d'épissure correspondants dans le tiroir susdit jusqu'à un premier canal correspondant prévu dans un plateau correspondant, et ensuite vers des moyens prévus dans le plateau correspondant pour la connexion d'une seconde extrémité de la fibre en queue de cochon à une seconde fibre correspondante venant du câble de distribution; le guidage de chacune des secondes fibres susdites à travers un second canal dans son plateau correspondant et à travers une seconde ouverture prévue dans le logement; et la fermeture du tiroir et le basculement des plateaux susdits pour les ramener dans le logement.

FIG. 10

FIG. 15

1

FIG.11

FIG. 14

EP 0 215 668 B1

FIG. 12

FIG. 13

EP 0 215 668 B1

FIG.  16

FIG.  17

FIG. 18

FIG. 19

FIG. 20